# EUROPÄISCHE PATENTSCHRIFT

(11) **EP 2 881 730 B1**
(45) Veröffentlichungstag und Bekanntmachung des Hinweises auf die Patenterteilung: **08.07.2020**
(21) Anmeldenummer: 14195919.7
(22) Anmeldetag: 02.12.2014
(51) Int. Cl.: G01N 21/88

(54) **Vorrichtung und Verfahren zur Ermittlung spektraler Eigenschaften einer Oberfläche**
Device and method for determining spectral properties of a surface
Procédé et dispositif de détermination de propriétés spectrales d'une surface

(30) Priorität: 05.12.2013 AT 508042013
(43) Veröffentlichungstag der Anmeldung: 10.06.2015
(73) Patentinhaber: Silicon Austria Labs GmbH, 8010 Graz (AT)
(72) Erfinder: Tortschanoff, Andreas, 9500 Villach (AT); Kenda, Andreas, 9020 Klagenfurt (AT)
(74) Vertreter: Wirnsberger, Gernot

(56) Entgegenhaltungen:
- US-A- 3 658 424
- US-A- 3 775 010
- US-A1- 2007 252 990
- US-B1- 6 628 383

## Beschreibung

Die Erfindung betrifft eine Vorrichtung zur insbesondere linienförmigen oder bereichsweisen Ermittlung spektraler Eigenschaften einer Oberfläche, umfassend zumindest ein bewegbar angeordnetes, dispersives Element zur spektralen Zerlegung von Licht.

Weiter betrifft die Erfindung eine Verwendung einer Vorrichtung der vorstehend genannten Art.

Des Weiteren betrifft die Erfindung ein Verfahren zur insbesondere linienförmigen oder bereichsweisen Ermittlung spektraler Eigenschaften einer Oberfläche, wobei zumindest ein dispersives Element zur spektralen Zerlegung von Licht bewegbar angeordnet wird.

Das linienförmige oder bereichsweise Erfassen spektraler Eigenschaften einer Oberfläche wird unter anderem in der Mülltrennung angewendet. Ein grobes Trennen von z. B. Plastik aufgrund dessen optischer Eigenschaften ist im sichtbaren Spektralbereich von Personal relativ einfach durchführbar. Soll Plastik jedoch detaillierter unterschieden werden (sprich die Wellenlängenbereiche, nach denen sortiert werden soll, werden kleiner angenommen), ist dies nur mit einer dafür geeigneten Vorrichtung möglich. Im infraroten Spektralbereich, welcher vom menschlichen Auge nicht wahrgenommen werden kann, ist das Trennen von Müll generell nur mit einer entsprechenden Vorrichtung durchführbar. Ein weiterer Bereich, in welchem eine Oberfläche bezüglich spektraler Eigenschaften untersucht wird, ist die Lebensmittelindustrie. Mängel in Lebensmitteln, wie z. B. Schimmelpilze, sind nur dann für das menschliche Auge sichtbar, wenn diese bereits relativ weit ausgebreitet sind. Schimmelpilzspuren in Lebensmittel sollen jedoch frühzeitig erkannt werden, was mit einer dafür geeigneten Vorrichtung, welche spektrale Eigenschaften der Oberfläche von Lebensmitteln ermittelt, möglich ist.

Aus dem Stand der Technik sind Vorrichtungen zur Ermittlung spektraler Eigenschaften einer Oberfläche bekannt. Diese bekannten Vorrichtungen arbeiten mit einstellbaren Wellenlängenfiltern, um die Intensität eines oder mehrerer Wellenlängenanteile einer zu untersuchenden Oberfläche einer Probe zu ermitteln. Mit solchen Vorrichtungen ist es möglich, Licht in einem bestimmten Spektralbereich wellenlängenabhängig zu vermessen. Kernstück einer solchen Vorrichtung ist ein wellenlängenselektierendes Element, wie zum Beispiel ein Gitter oder Prisma, auf welches das Licht einfällt, dessen spektrale Verteilung bestimmt werden soll, und welches das einfallende Licht in dessen spektrale Bestandteile zerlegt oder einen Teil davon ausfiltert, sowie ein entsprechender Detektor zum Aufnehmen eines oder mehrerer spektraler Bestandteile bzw. eines Spektrums. Entsprechende Vorrichtungen nach dem Stand der Technik sind aus US-A-6628383, US-A-3658424, US-A-3775010 und US-A-2007/0252990 bekannt.

Eine Art von Vorrichtungen arbeitet mit zeitlich variablen, einstellbaren Wellenlängenfiltern. Als Wellenlängenfilter kommen kontinuierliche oder diskrete Filterräder, auf Flüssigkristallen basierende variable Filter, akustooptisch variable Filter oder elektrooptisch variable Filter infrage. Bei diesen einstellbaren Wellenlängenfiltern werden bei entsprechender Auslegung die spektralen Informationen aller Bildpunkte der Probenoberfläche simultan auf den eingestellten Wellenlängenbereich reduziert und können daher mit einer flächigen Anordnung von Detektoren, sogenannten Detektorarrays, zeitgleich aufgenommen werden. Filterräder haben jedoch den Nachteil, dass diese nur relativ langsam und unflexibel beim Einstellen verschiedener Wellenlängenbereiche sind. Soll eine zu detektierende Mittenwellenlänge geändert werden, nimmt dies viel Zeit in Anspruch. Weiter haben Filterräder den Nachteil, dass diese in einem fertigen System fest vorgegebene Filterbereiche haben. Akustooptische und elektrooptische Filter haben den Nachteil, dass der einstellbare Wellenlängenbereich stark begrenzt ist. Diese Art von Filtern ist z. B in einem Bereich von 400 nm bis maximal 800 nm oder von 600 nm bis maximal 1200 nm einstellbar und somit eher unflexibel anwendbar. Weiter sind akustooptische und elektrooptische Filter stark temperaturabhängig, wobei diese Temperaturabhängigkeit die spektralen Eigenschaften der Filter beeinflusst. Um diesen Nachteil zu verringern, ist eine temperaturstabile Vorrichtung notwendig, die allerdings den Nachteil eines komplizierten und kostenintensiven Aufbaus mit sich bringt. Die zum Erfassen spektraler Eigenschaften erforderlichen Detektorarrays sind im sichtbaren Wellenlängenbereich auf Siliciumbasis gefertigt und zwar relativ kostengünstig, allerdings nur bis ca. 1100 nm empfindlich. Um größere Wellenlängen als 1100 nm zu detektieren, muss auf andere Detektoren, wie z. B. InGaAs-Detektoren für den nahen infraroten Bereich, zurückgegriffen werden. Diese Detektoren sind jedoch sehr teuer.

Eine weitere Art von Vorrichtungen zur Ermittlung spektraler Eigenschaften einer Oberfläche arbeitet mit räumlicher Wellenlängenseparierung durch Dispersion mit einem dispersiven Element, wie z. B. einem Gitter oder Prisma. Dabei ist das dispersive Element eindimensional auslenkbar angebracht, um eine spektrale Auflösung zu erreichen. Somit können mehrere Wellenlängen für einen Punkt einer zu untersuchenden Oberfläche von einem Punktdetektor erfasst werden. Die Einstellungen eines Gitters oder Prismas erfolgen üblicherweise über einen Schrittmotor. Diese mechanische Steuerung und die Bewegung eines solchen Gitters bzw. Prismas sind aufwendig und teuer sowie leicht fehleranfällig. Um bei diesen Vorrichtungen eine Ortsauflösung zu erreichen, wird eine Relativbewegung zwischen Probe und Vorrichtung ausgeführt. Nachteilig bei der Realisierung mit einer Relativbewegung sind jedoch die Messdauer, welche vor allem durch die mechanische Positionseinstellung bedingt ist, sowie die eingeschränkte Flexibilität für verschiedene Einsatzszenarios. Es werden daher auch in dieser Kategorie meistens Systeme mit Detektorarrays realisiert, mit denen zu einem Zeitpunkt die spektrale Information entlang einer Linie einer Oberfläche einer Probe aufgenommen werden kann. Solche Detektorarrays haben wiederum einen relativ hohen Stromverbrauch und sind sehr teuer, vor allem bei Auslegung für den nahen infraroten Bereich, da die dort verwendeten InGaAs-Detektoren im Gegensatz zu Silicium-Detektoren sehr kostenintensiv sind und eine geringere Auflösung aufweisen.

Weiter sind spektrale Eigenschaften einer Oberfläche interferometrisch bestimmbar. Eine hierfür geeignete Vorrichtung kann z. B. ein Fourier-Transformations-Spektrometer sein, mit welchem der gesamte Wellenlängenbereich eines einfallenden Lichtes kontinuierlich durchgestimmt und aufgenommen werden kann. Ein Fourier-Transformations-Spektrometer hat jedoch die Nachteile großer räumlicher Abmessungen und einer langen Scangeschwindigkeit, welche durch die Trägheit schwerer Bauteile bedingt ist. Grundsätzlich kann zudem bei einer interferometrischen Messung immer nur ein Oberflächenpunkt gemessen werden. Dadurch muss entweder durch in zwei Achsen verkippbare Spiegel oder durch eine Relativbewegung zwischen Probe und Interferometer die gesamte Probenoberfläche Schritt für Schritt abgetastet werden, was wiederum sehr zeitaufwendig ist. Mittlerweile gibt es schon einige Ansätze, die Abmessungen eines Fourier-Transformations-Spektrometers mithilfe von mikromechanischen Bauelementen drastisch zu verringern. Jedoch bleibt immer noch der Nachteil der vielen verschiedenen, teils sehr teuren Bauteile.

Aufgabe der Erfindung ist es, eine Vorrichtung der eingangs genannten Art anzugeben, mit welcher sowohl spektral als auch ortsaufgelöst gearbeitet werden kann und welche eine hohe Flexibilität, eine kompakte Ausführungsform, eine hohe Detektionsgeschwindigkeit sowie niedrige Komponentenkosten aufweist.

Eine zweite Aufgabe der Erfindung ist es, ein Verfahren der eingangs genannten Art anzugeben, mit dem bei hoher Flexibilität in kostengünstiger Weise eine hohe Detektionsgeschwindigkeit erreicht wird.

Die erste Aufgabe wird erfindungsgemäß dadurch gelöst, dass bei einer Vorrichtung der eingangs genannten Art das zumindest eine dispersive Element um zwei Achsen auslenkbar angeordnet ist.

Ein mit der Erfindung erzielter Vorteil ist insbesondere darin zu sehen, dass durch das um zwei Achsen auslenkbar angeordnete dispersive Element nur ein Bauteil für zweidimensionale Messungen notwendig ist. Damit ergibt sich auch der Vorteil, dass bei kompakter Ausbildung der Vorrichtung die Wellenlänge bzw. der Wellenlängenbereich sehr schnell und einfach geändert werden kann. Auch wird eine hohe Flexibilität hinsichtlich einer einstellbaren Mittenwellenlänge erreicht.

Zweckmäßigerweise sind die zwei Achsen des dispersiven Elementes etwa senkrecht zueinander orientiert, wobei bei einer Drehung um eine erste Achse eine Ortsauflösung erfolgt, und bei einer Drehung um eine zweite Achse, deren Ebene eine Ebene der ersten Achse durchläuft, eine spektrale Auflösung des Lichtes erfolgt. Damit ist es möglich, eine spektrale Auflösung und eine Ortsauflösung gleichzeitig mit nur einem Bauteil bei variabel einstellbarer Wellenlänge zu erzielen. Das Bauteil ist dabei beweglich angebracht.

Des Weiteren ist es von Vorteil, wenn das dispersive Element aus einem mikromechanischen Bauelement, vorzugsweise aus Silicium bestehend, gebildet ist. Optimalerweise handelt es sich dabei um einen mikromechanischen Spiegel mit aufgebrachtem Gitter. Durch die damit mögliche sehr kleine Ausbildung des dispersiven Elementes kann die Vorrichtung als Miniaturspektrometer ausgebildet sein.

Günstig ist es in diesem Zusammenhang, wenn das dispersive Element in Schwingung versetzbar und/oder quasistatisch auslenkbar ist. Grundsätzlich ist das dispersive Element in zwei unterschiedlichen Betriebszuständen betreibbar. Zum einen kann es als eine Art Wellenlängenfilter verwendet werden. Dabei wird die erste Achse, durch welche ein zu untersuchender Punkt einer Oberfläche einer Probe einstellbar ist, quasistatisch ausgelenkt oder resonant in Schwingung versetzt. Die zweite Achse des dispersiven Elementes, durch welche eine Wellenlänge selektierbar ist, wird festgehalten bzw. eine Auslenkung quasistatisch eingestellt, sodass die Oberfläche eines Formteils für eine bestimmte Wellenlänge, die sogenannte Mittenwellenlänge, abtastbar ist. Bei diesem Betriebsmodus ist die gewählte Mittenwellenlänge schnell und einfach veränderbar. Zum anderen kann das dispersive Element so ausgebildet sein, dass die erste Achse des dispersiven Elementes in Schwingung versetzbar und somit die Oberfläche des Formteils linienförmig abtastbar ist.

Es ist vorgesehen, dass entweder eine der beiden Achsen oder beide Achsen des dispersiven Elementes in Schwingung versetzbar sind. Vorteilhaft ist es, wenn eine Schwingung des dispersiven Elementes resonant erfolgt, sofern dieses um eine der beiden Achsen oder um beide Achsen schwingend betrieben ist. Die Frequenz der Schwingung entspricht dabei der Resonanzfrequenz der jeweiligen Achse. Von Vorteil ist, dass die Geschwindigkeit des schwingenden dispersiven Elementes flexibel einstellbar und schnell variierbar ist, je nachdem wie schnell und wie genau eine Oberfläche untersucht werden soll. Das dispersive Element schwingt dabei vorzugsweise mit einer Frequenz von bis zu 50 kHz. Insgesamt ergibt sich eine hohe Flexibilität hinsichtlich der Funktionsweise des dispersiven Elementes.

Es hat sich bewährt, dass optische Elemente zur Abbildung eines geometrischen Bereiches einer Probe vorgesehen sind. Dadurch ist der zu untersuchende Bereich exakt auf ein Gerät zum Nachweis des spektral zerlegten Lichtes fokussierbar.

Ein weiterer Vorteil ergibt sich, wenn eine Steuereinheit vorgesehen ist, mit welcher Auslenkungen des dispersiven Elementes steuerbar sind. Mit der Steuereinheit sind die beiden Achsen des dispersiven Elementes unabhängig voneinander steuerbar, sodass ein definiertes Auslenken beider Achsen vorgebbar ist.

Des Weiteren ist es von Vorteil, wenn mit der Steuereinheit eine Relativbewegung zwischen der Probe und dem dispersiven Element steuerbar ist. Damit kann die Probe auch in einer zweiten Achse, optimalerweise senkrecht zu einer ersten Achse der Probe, ortsaufgelöst vermessen werden.

Von Vorteil ist es auch, wenn das Licht durch das dispersive Element spektral zerlegbar ist und ein Detektor vorgesehen ist, mit dem Bestandteile des spektral zerlegten Lichtes erfassbar sind. Verschieden einstellbare Wellenlängen bzw. Wellenlängenbereiche werden vom Detektor dann erfasst.

Bei der erfindungsgemäßen Vorrichtung ist vorgesehen, dass der Detektor ein ortsfest positionierter Punktdetektor ist. Somit ist eine Oberfläche einer Probe mit nur einem ortsfesten Punktdetektor erfassbar. Ein Punktdetektor ist üblicherweise ein kompakter Detektor, welcher ein über dessen aktive Fläche integriertes Signal ohne weitere Ortsauflösung ausgibt und daher im Vergleich zu Detektorzeilen und Detektorarrays kostengünstig ist. Die mit dem Punktdetektor reduzierten Kosten wirken sich insbesondere bei Messungen im infraroten Spektralbereich aus, da die Kosten von Detektorzeilen und Detektorarrays vor allem in diesem Bereich sehr hoch sind. Durch den Punktdetektor ergeben sich niedrige Komponentenkosten auch für Wellenlängenbereiche, in denen Silicium-Detektoren nicht verwendet werden können.

Von Vorteil ist es auch, wenn das dispersive Element und der Detektor Signale zur Steuereinheit senden, die Steuereinheit diese bewertet und mittels Rückkoppelkreis weitere Steuersignale beeinflussbar sind. Damit kann instantan auf die Bewegungen des dispersiven Elementes reagiert werden bzw. ist das Auslenken des dispersiven Elementes jederzeit, abhängig von den von der Steuereinheit erfassten Signalen, neu definierbar.

Die erfindungsgemäße Vorrichtung erlaubt es, Detektorsignale mit einer vorgesehenen Signalverarbeitungseinheit auszuwerten. So sind aus den zeitlich nacheinander aufgenommenen Detektorsignalen Bilder der Oberfläche der Probe erzeugbar, die in die gewünschten Spektralbereiche zerlegt sind. Somit ist ein erfasstes Spektrum nicht nur elektronisch auswertbar, sondern auch visuell auf einem Bildschirm oder Ähnlichem betrachtbar.

Eine Verwendung der erfindungsgemäßen Vorrichtung erfolgt typischerweise bei einer spektroskopischen, ortsaufgelösten Untersuchung einer geometrischen Probenoberfläche.

Die zweite Aufgabe wird erfindungsgemäß dadurch gelöst, dass bei einem Verfahren der eingangs genannten Art ein geometrischer Bereich einer Probe durch Positionieren des dispersiven Elementes um eine erste Achse eindimensional abgetastet wird, wobei auf das dispersive Element treffendes Licht von diesem spektral zerlegt wird, und durch Positionieren des dispersiven Elementes um eine zweite Achse die Richtung des spektral zerlegten Lichtes eindimensional eingestellt wird.

Ein Vorteil des erfindungsgemäßen Verfahrens ist insbesondere darin zu sehen, dass das dispersive Element durch die vorgesehenen Auslenkungen entlang einer geometrischen Linie spektrale Informationen einer Probenoberfläche ortsaufgelöst liefert. Hierfür erfolgen die Drehungen bevorzugt um zwei zueinander senkrecht stehende Achsen.

Eine Abtastung wird mit dem dispersiven Element wellenlängenselektiv und/oder sequenziell durchgeführt, wobei bei hoher Detektionsgeschwindigkeit und somit niedriger Messzeit spektrale Anteile ermittelt werden. Dabei werden zwei Betriebszustände unterschieden. Ein Zustand dient dem Untersuchen einer Probenoberfläche bezüglich einer bestimmten Mittenwellenlänge mittels Auslenken des dispersiven Elementes um die erste Achse und Festhalten bzw. quasistatischem Positionieren der zweiten Achse des dispersiven Elementes. Der zweite Zustand dient dem schnellen Auslesen eines kompletten Wellenlängenbereichs für jeden Oberflächenpunkt. Dabei schwingt die zweite Achse des dispersiven Elementes, in der die Dispersion stattfindet, resonant und die erste Achse des dispersiven Elementes wird quasistatisch oder resonant betrieben.

Von Vorteil ist es, dass der geometrische Bereich der Probe linienweise abgetastet wird, sodass der gesamte Bereich Linie für Linie erfasst werden kann, ohne dass gewisse Bereiche nicht berücksichtigt werden.

Es hat sich bewährt, dass das auf das dispersive Element treffende Licht in einer die erste Achse des dispersiven Elementes durchlaufenden Ebene spektral zerlegt wird. Durch diese Maßnahme wird sichergestellt, dass jeder Punkt des zu untersuchenden Bereiches auf seine spektralen Eigenschaften hin untersucht wird.

Von Vorteil ist es auch, wenn das spektral zerlegte Licht abhängig von der Auslenkung des dispersiven Elementes um die zweite Achse von einem als ortsfesten Punktdetektor ausgebildeten Detektor erfasst wird. Durch diese Maßnahme kann die Wellenlänge bzw. der Wellenlängenbereich, welcher vom Detektor erfasst werden soll, ausgesucht und variiert werden. Der ortsfeste Punktdetektor hat den Vorteil, dass dieser im Vergleich zu einem Zeilendetektor oder zu Detektorarrays vor allem im infraroten Spektralbereich billiger ist, ohne dass damit Qualitätsverluste einhergehen.

Nützlich ist es, wenn mit einer Signalverarbeitungseinheit aus Detektorsignalen ein spektral zerlegtes Bild des geometrischen Bereiches der Probe erzeugt wird. Dadurch wird eine Abbildung des abgetasteten Bereiches dargestellt, welche visuell betrachtet werden kann.

Weiter ist es von Vorteil, wenn Informationen über das spektral zerlegte Bild des geometrischen Bereiches der Probe von der Signalverarbeitungseinheit in einem dreidimensionalen Datenfeld gespeichert werden. Somit können die erste Achse der Probenoberfläche und die zweite Achse der Probenoberfläche sowie die vom untersuchten Wellenlängenbereich abhängige Intensität des Bildpunktes dargestellt werden.

Weitere Merkmale, Vorteile und Wirkungen der Erfindung ergeben sich aus den dargestellten Ausführungsbeispielen. In den Zeichnungen, auf welche dabei Bezug genommen wird, zeigen:
Fig. 1 eine erfindungsgemäße Vorrichtung zur Ermittlung spektraler Anteile einer Oberfläche;
Fig. 2, 3 und 4 schematische Darstellungen eines erfindungsgemäßen Verfahrens.

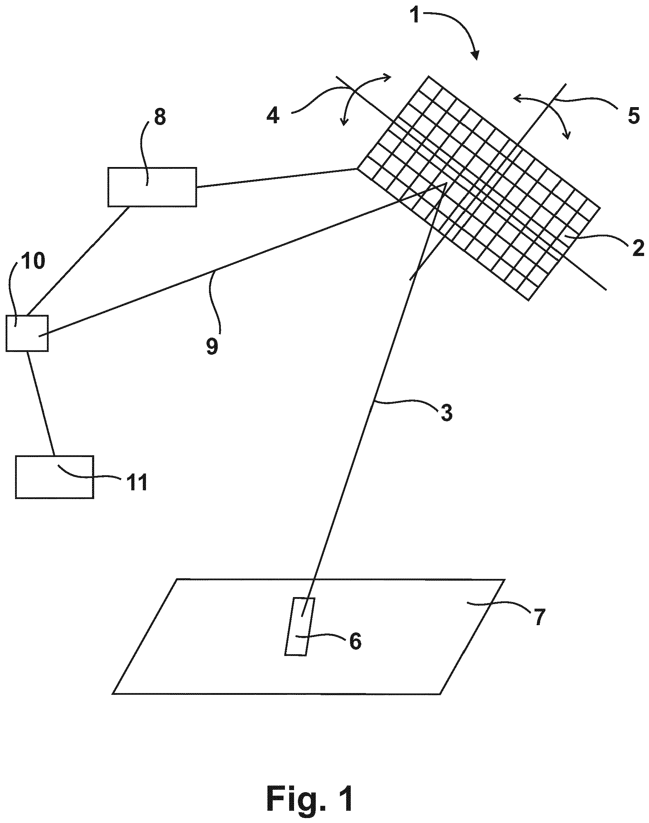

In Fig. 1 ist eine Vorrichtung 1 zur Ermittlung spektraler Anteile einer Oberfläche einer Probe 7 umfassend ein bewegbar gelagertes, dispersives Element 2 zur spektralen Zerlegung von Licht 3 dargestellt. Weiter sind ein Detektor 10, mit dem spektral zerlegtes Licht 9 detektierbar ist, und eine Steuereinheit 8, die sowohl mit dem Detektor 10 als auch dem dispersiven Element 2 verbunden ist, und eine optionale Signalverarbeitungseinheit 11 vorgesehen. Der Übersichtlichkeit wegen sind optische Bauteile zur Erzeugung einer Abbildung, wie zum Beispiel eine oder mehrere Linsen, nicht dargestellt.

Das dispersive Element 2 ist mit Vorteil ein mikromechanischer Spiegel mit aufgebrachtem Gitter und dieses ist in zwei Achsen 4, 5, die idealerweise etwa orthogonal aufeinander stehen, auslenkbar und entsprechend angeordnet. Grundsätzlich laufen die beiden Achsen 4, 5 durch das dispersive Element 2 selbst hindurch. Es ist jedoch auch möglich, dass das dispersive Element 2 an einem oder mehreren zusätzlichen bewegbaren (z. B. schwenkbaren) Teilen angebracht ist und dabei die zwei Achsen 4, 5 nicht durch das dispersive Element, sondern durch das eine oder die mehreren zusätzlichen Teile durchgehen, sodass das dispersive Element 2 über die zusätzlichen Teile indirekt auslenkbar angebracht ist. Das dispersive Element 2 empfängt das von der Probe 7 ausgesandte Licht 3 und zerlegt das Licht 3, gemäß seiner dispersiven Eigenschaften, in spektrale Anteile des Lichtes 9. Das Licht 3 wird durch optische Elemente, z. B. eine oder mehrere nicht dargestellte Sammellinsen, so ausgerichtet, dass es möglichst als Parallelstrahlbündel auf das dispersive Element 2 trifft. Durch Auslenken des dispersiven Elementes 2 um die erste Achse 4 kann ein zu untersuchender geometrischer Bereich 6 der Probe 7 ausgesucht und linienförmig abgetastet werden. Das Licht 3 vom geometrischen Bereich 6 wird vom dispersiven Element 2 zerlegt, wobei die spektrale Zerlegung in einer Ebene parallel zu einer Oberfläche des dispersiven Elementes 2 entlang der ersten Achse 4 erfolgt. Die Richtung des spektral zerlegten Lichtes 9 kann durch Auslenken des dispersiven Elementes 2 um die zweite Achse 5 in der Ebene variiert werden. Somit kann durch dieses Auslenken um die zweite Achse 5 entschieden werden, welcher Wellenlängenbereich um die gewünschte Mittenwellenlänge bzw. welcher Teil des spektral zerlegten Lichtes 9 auf den Detektor 10 fällt. Der Detektor 10 ist als Punktdetektor ausgeführt, wobei der Punktdetektor so zu verstehen ist, dass dieser ein Detektor 10 ist, welcher nur eine Signalinformation ausgibt. Dementsprechend ist auch ein Liniendetektor oder ein Detektorarray, welcher bzw. welches nur eine Information ausgibt, als Punktdetektor anzusehen. Der Punktdetektor wird derart positioniert, dass der gewünschte Wellenlängenbereichsausschnitt, meist möglichst schmal gewählt, auf diesen Punktdetektor fällt und abhängig vom Auslenken des dispersiven Elementes 2 um die zweite Achse 5 eine definierte Wellenlänge eingestellt werden kann. Dieser Vorgang zum Abtasten, Zerlegen und zur spektralen Selektion vom Licht 3 der Probe 7 wird Scan genannt. Zusätzlich kann die Steuereinheit 8 eine Relativbewegung zwischen der Probe 7 und dem dispersiven Element 2 und dem Detektor 10 ansteuern. Damit kann der geometrische Bereich 6 der Probe 7 auch entlang einer zweiten, optimalerweise orthogonal zur ersten verlaufenden Achse wiederum linienförmig, abgetastet und vermessen werden.

Das dispersive Element 2 ist wie erwähnt als ein mikromechanisches Bauelement ausgeführt, günstigerweise als ein mikromechanischer Spiegel mit aufgebrachtem Gitter, vorzugsweise bestehend aus Silicium. Zur Realisierung eines schnellen Scans ist das dispersive Element 2 ausgeführt als ein speziell resonant schwingender Mikrospiegel, der mit einer Frequenz von vorzugsweise bis zu 50 kHz betrieben wird, besonders gut geeignet. Eine weitere Art der Spiegelausführung ist gegeben, wenn das dispersive Element quasistatisch betreibbar ist.

Die Steuereinheit 8 generiert definierte Auslenkungen des dispersiven Elementes 2 um die beiden Achsen 4, 5. Zusätzlich kann die Steuereinheit 8 auch Informationen an den Detektor 10 sowie an die Signalverarbeitungseinheit 11 übermitteln. Solche Informationen können zum Beispiel den Auslesezeitpunkt und die Auslesedauer betreffen. Optional können Informationen über das Auslenken des dispersiven Elementes 2 und zur Position der Probe 7 beim Ausführen einer Relativbewegung sowie Detektorsignale von diesen Komponenten zur Steuereinheit 8 gesendet werden. Diese Informationen werden mit der Steuereinheit 8 ausgewertet und können per Rückkoppelkreis die weiteren Signale der Steuereinheit 8 festlegen.

In Fig. 1 ist auch die optionale Signalverarbeitungseinheit 11 dargestellt. Diese erzeugt aus den zeitlich nacheinander aufgenommenen Detektorsignalen das in die gewünschten Spektralbereiche zerlegte Bild der Oberfläche des geometrischen Bereiches 6 der Probe 7. Diese Informationen werden bevorzugt in einem dreidimensionalen Datenarray gespeichert. Dabei entspricht die erste Dimension der ersten Achse der Oberfläche der Probe 7, die zweite Dimension der zweiten Achse der Oberfläche der Probe 7 und die dritte Dimension gibt die Intensität jedes Bildpunktes entsprechend den untersuchten Wellenlängen wieder. Mithilfe der Signalverarbeitungseinheit 11 kann ein detektierter Wellenlängenbereich, also ein Spektrum, nicht nur elektronisch ausgewertet werden, sondern auch auf einem Bildschirm betrachtet werden.

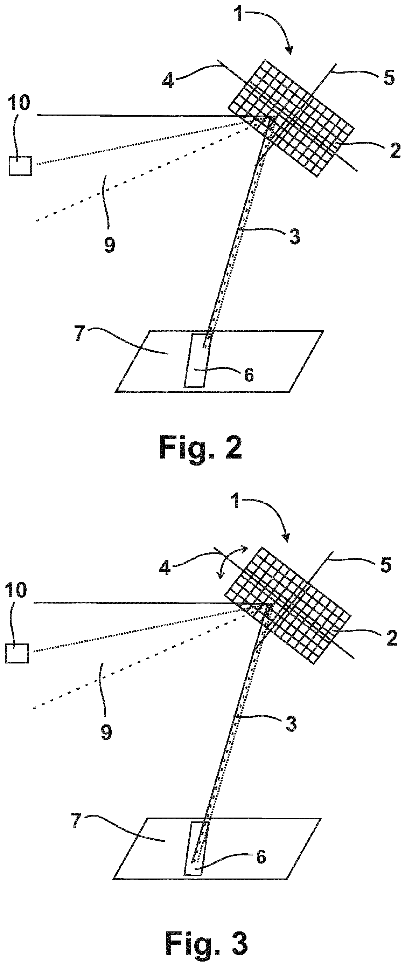

Anhand von Fig. 2, 3 und 4 ist das Konzept eines erfindungsgemäßen Verfahrens schematisch dargestellt. Das von der Probe 7 ausgehende Licht 3 fällt auf das um die erste Achse 4 und die zweite Achse 5 drehbar angebrachte dispersive Element 2. Das dispersive Element 2 ist Bestandteil der Vorrichtung 1. Das dispersive Element 2 zerlegt das einfallende Licht 3 in das spektral zerlegte Licht 9, das zum Detektor 10 geführt wird. Die verschiedenen Wellenlängen bzw. Farben des Lichtes 3 und des spektral zerlegten Lichtes 9 sind in den Figuren durch verschiedene Linienarten dargestellt. Das dispersive Element 2 kann in folgenden zwei verschiedenen Betriebszuständen arbeiten: Eine erste Art ist das Abtasten der Oberfläche der Probe 7 für eine bestimmte Wellenlänge bzw. Mittenwellenlänge. Dabei wird das dispersive Element 2 um die erste Achse 4 gedreht, wie dies durch die Pfeile in Fig. 3 angedeutet ist. Ausgehend von Fig. 2 wird in Fig. 3 die Auslenkung des dispersiven Elementes 2 so verändert, dass für die gesamte Oberfläche eines Bereiches 6 der Probe 7 immer dieselbe Wellenlänge auf den Detektor 10 fällt. Die zweite Achse 5 wird dabei festgehalten bzw. quasistatisch eingestellt. Bei dem beschriebenen Betriebszustand funktioniert das dispersive Element 2 bzw. die Vorrichtung 1 als Wellenlängenfilter.

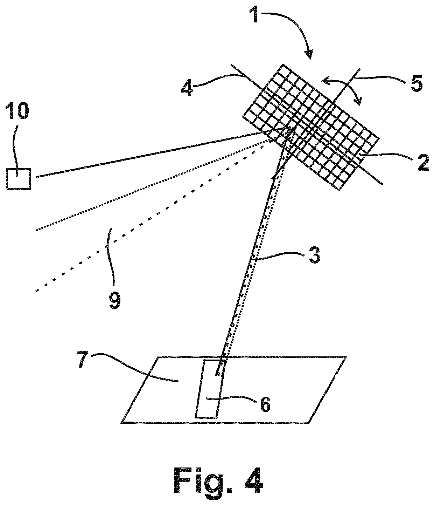

Der zweite Betriebszustand des dispersiven Elementes 2 umfasst das schnelle Auslesen eines gesamten Wellenlängenbereiches der Oberfläche der Probe 7 entlang einer Linie bzw. eines Bereiches 6. Ausgehend von Fig. 2 wird in Fig. 4 die zweite Achse 5 resonant in Schwingung versetzt, sodass für einen Punkt der Oberfläche der Probe 7 alle Wellenlängen nacheinander auf den Detektor 10 fallen und von diesem ausgelesen werden. Die erste Achse 4 kann dabei entweder quasistatisch oder resonant betrieben werden. Somit wird beim zweiten Betriebszustand linienförmig jede Wellenlänge für jeden Punkt der Oberfläche der Probe 7 erfasst.

Die erfindungsgemäße Vorrichtung und das erfindungsgemäße Verfahren bieten gegenüber dem Stand der Technik somit folgende Vorteile:
- weniger bzw. kleinere optische Elemente;
- nur ein Punktdetektor;
- kompaktere Bauweise;
- variabel einstellbares dispersives Element;
- flexibel einstellbare Mittenwellenlänge;
- erhebliche Kostenreduktion im Vergleich zu einer Anordnung mit Zeilendetektoren bzw. Detektorarrays besonders im infraroten Spektralbereich.

## Patentansprüche

1. Vorrichtung (1) zur insbesondere linienförmigen oder bereichsweisen Ermittlung spektraler Eigenschaften einer Oberfläche, umfassend zumindest ein bewegbar angeordnetes, dispersives Element (2) zur spektralen Zerlegung von Licht (3), wobei das zumindest eine dispersive Element (2) um zwei Achsen (4, 5) auslenkbar angeordnet ist, **dadurch gekennzeichnet, dass** die zwei Achsen (4, 5) des dispersiven Elementes (2) etwa senkrecht zueinander orientiert sind, wobei bei einer Drehung um eine erste Achse (4) eine Ortsauflösung erfolgt, und bei einer Drehung um die zweite Achse (5), deren Ebene eine Ebene der ersten Achse (4) durchläuft, eine spektrale Auflösung des Lichtes (3) erfolgt.

2. Vorrichtung (1) nach Anspruch 1, **dadurch gekennzeichnet, dass** das dispersive Element (2) aus einem mikromechanischen Bauelement, vorzugsweise aus Silicium bestehend, gebildet ist.

3. Vorrichtung (1) nach Anspruch 2, **dadurch gekennzeichnet, dass** das dispersive Element (2) in Schwingung versetzbar und/oder quasistatisch auslenkbar ist.

4. Vorrichtung (1) nach einem der Ansprüche 1 bis 3, **dadurch gekennzeichnet, dass** eine Steuereinheit (8) vorgesehen ist, mit welcher Auslenkungen des dispersiven Elementes (2) steuerbar sind.

5. Vorrichtung (1) nach Anspruch 4, **dadurch gekennzeichnet, dass** mit der Steuereinheit (8) eine Relativbewegung zwischen einer Probe (7) und dem dispersiven Element (2) steuerbar ist.

6. Vorrichtung (1) nach einem der Ansprüche 1 bis 5, **dadurch gekennzeichnet, dass** das Licht (3) durch das dispersive Element (2) spektral zerlegbar ist und ein Detektor (10) vorgesehen ist, mit dem Bestandteile des spektral zerlegten Lichtes (9) erfassbar sind.

7. Vorrichtung (1) nach Anspruch 6, **dadurch gekennzeichnet, dass** der Detektor (10) ein ortsfest positionierter Punktdetektor ist.

8. Vorrichtung (1) nach Anspruch 7, **dadurch gekennzeichnet, dass** das dispersive Element (2) und der Detektor (10) so ausgebildet sind, dass diese Signale zur Steuereinheit (8) senden und die Steuereinheit (8) diese bewertet, um mittels Rückkoppelkreis weitere Steuersignale zu beeinflussen.

9. Verwendung einer Vorrichtung (1) nach einem der Ansprüche 1 bis 8 zur spektroskopischen, ortsaufgelösten Untersuchung einer geometrischen Probenoberfläche.

10. Verfahren zur insbesondere linienförmigen oder bereichsweisen Ermittlung spektraler Eigenschaften einer Oberfläche, wobei zumindest ein dispersives Element (2) zur spektralen Zerlegung von Licht (3) bewegbar angeordnet wird, **dadurch gekennzeichnet, dass** ein geometrischer Bereich (6) einer Probe (7) durch Positionieren des dispersiven Elementes (2) um eine erste Achse (4) eindimensional abgetastet wird, wobei auf das dispersive Element (2) treffendes Licht (3) von diesem spektral zerlegt wird, und durch Positionieren des dispersiven Elementes (2) um eine zweite Achse (5) die Richtung des spektral zerlegten Lichtes (9) eindimensional eingestellt wird.

11. Verfahren nach Anspruch 10, **dadurch gekennzeichnet, dass** eine Abtastung mit dem dispersiven Element (2) wellenlängenselektiv und/oder sequenziell durchgeführt wird.

12. Verfahren nach Anspruch 10 oder 11, **dadurch gekennzeichnet, dass** der geometrische Bereich (6) der Probe (7) linienweise abgetastet wird.

13. Verfahren nach einem der Ansprüche 10 bis 12, **dadurch gekennzeichnet, dass** das auf das dispersive Element (2) treffende Licht (3) in einer um die erste Achse (4) des dispersiven Elementes (2) durchlaufenden Ebene spektral zerlegt wird.

14. Verfahren nach einem der Ansprüche 10 bis 13, **dadurch gekennzeichnet, dass** das spektral zerlegte Licht (9) abhängig von der Auslenkung des dispersiven Elementes (2) um die zweite Achse (5) von einem als ortsfester Punktdetektor ausgebildeten Detektor (10) erfasst wird.

## Claims

1. A device (1) for the determination, in particular line-by-line or area-by-area, of spectral properties of a surface, comprising at least one movably arranged dispersive element (2) for the spectral dispersion of light (3), wherein the at least one dispersive element (2) is arranged deflectably about two axes (4, 5), **characterised in that** the two axes (4, 5) of the dispersive element (2) are orientated approximately perpendicular to one another, wherein upon rotation about a first axis (4) a spatial resolution takes place, and upon rotation about the second axis (5), the plane whereof runs through a plane of the first axis (4), a spectral resolution of the light (3) takes place.

2. The device (1) according to claim 1, **characterised in that** the dispersive element (2) is formed from a micro-mechanical component, preferably made of silicon.

3. The device (1) according to claim 2, **characterised in that** the dispersive element (2) can be set into oscillation and/or is quasi-statically deflectable.

4. The device (1) according to any one of claims 1 to 3, **characterised in that** a control unit (8) is provided, with which deflections of the dispersive element (2) can be controlled.

5. The device (1) according to claim 4, **characterised in that** a relative movement between a sample (7) and the dispersive element (2) can be controlled with the control unit (8).

6. The device (1) according to any one of claims 1 to 5, **characterised in that** the light (3) can be dispersed spectrally by the dispersive element (2) and a detector (10) is provided, with which components of the spectrally dispersed light (9) can be detected.

7. The device (1) according to claim 6, **characterised in that** the detector (10) is a point detector positioned stationary.

8. The device (1) according to claim 7, **characterised in that** the dispersive element (2) and the detector (10) are configured such that the latter send signals to the control unit (8) and the control unit (8) evaluates the latter in order to influence further control signals by means of a feedback circuit.

9. Use of a device (1) according to any one of claims 1 to 8 for the spectroscopic, spatially resolved examination of a geometric sample surface.

10. A method for the determination, in particular line-by-line or area-by-area, of spectral properties of a surface, wherein at least one dispersive element (2) is arranged movably for the spectral dispersion of light (3), **characterised in that** a geometric area (6) of a sample (7) is scanned one-dimensionally by positioning the dispersive element (2) about a first axis (4), wherein the light (3) striking the dispersive element (2) is spectrally dispersed by the latter, and the direction of the spectrally dispersed light (9) is set one-dimensionally by positioning the dispersive element (2) about a second axis (5).

11. The method according to claim 10, **characterised in that** a scan with the dispersive element (2) is carried out in a wavelength-selective and/or sequential manner.

12. The method according to claim 10 or 11, **characterised in that** the geometric area (6) of the sample (7) is scanned line by line.

13. The method according to any one of claims 10 to 12, **characterised in that** light (3) striking the dispersive element (2) is spectrally dispersed in a plane running through the first axis (4) of the dispersive element (2).

14. The method according to any one of claims 10 to 13, **characterised in that** the spectrally dispersed light (9) is detected by a detector (10) designed as a stationary point detector as a function of the deflection of the dispersive element (2) about the second axis (5).

## Revendications

1. Dispositif (1) destiné à la détermination en particulier linéaire ou par zones des propriétés spectrales d'une surface, comprenant au moins un élément dispersif disposé de façon mobile (2) pour la dispersion spectrale de lumière (3), sachant qu'au moins un élément dispersif (2) est disposé pouvant être dévié autour de deux axes (4, 5), **caractérisé en ce que** les deux axes (4, 5) de l'élément dispersif (2) sont orientés à peu près perpendiculairement l'un par rapport à l'autre, sachant qu' une résolution locale a lieu lors d'une rotation autour du premier axe (4) et une résolution spectrale de la lumière (3) a lieu lors d'une rotation autour du deuxième axe (5), dont le plan traverse un plan du premier axe (4).

2. Dispositif (1) selon la revendication 1, **caractérisé en ce que** l'élément dispersif (2) est formé d'un élément de construction micromécanique, est composé de préférence de silicium.

3. Dispositif (1) selon la revendication 2, **caractérisé en ce que** l'élément dispersif (2) peut être mis en vibration et/ou dévié de façon quasistatique.

4. Dispositif (1) selon l'une quelconque des revendications 1 à 3, **caractérisé en ce qu'**une unité de commande (8) est prévue avec laquelle des déviations de l'élément dispersif (2) peuvent être commandées.

5. Dispositif (1) selon la revendication 4, **caractérisé en ce qu'**un mouvement relatif entre un échantillon (7) et l'élément dispersif (2) peut être commandé avec l'unité de commande (8).

6. Dispositif (1) selon l'une quelconque des revendications 1 à 5, **caractérisé en ce que** la lumière (3) peut être dispersée spectralement par l'élément dispersif (2) et un détecteur (10) est prévu avec lequel des composants de la lumière (9) spectralement dispersée peuvent être saisis.

7. Dispositif (1) selon la revendication 6, **caractérisé en ce que** le détecteur (10) est un détecteur ponctuel positionné de façon fixe.

8. Dispositif (1) selon la revendication 7, **caractérisé en ce que** l'élément dispersif (2) et le détecteur (10) sont constitués de telle manière que ceux-ci envoient des signaux à l'unité de commande (8) et l'unité de commande (8) évalue ceux-ci pour influencer d'autres signaux de commande au moyen d'un circuit de rétroaction.

9. Utilisation d'un dispositif (1) selon l'une quelconque des revendications 1 à 8 pour l'analyse spectroscopique, à résolution locale d'une surface d'échantillon géométrique.

10. Procédé destiné à la détermination en particulier linéaire ou par zones des propriétés spectrales d'une surface, sachant qu'au moins un élément dispersif (2) est disposé pouvant bouger pour la dispersion spectrale de lumière (3), **caractérisé en ce qu'**une zone géométrique (6) d'un échantillon (7) est analysée par balayage de façon unidimensionnelle par positionnement de l'élément dispersif (2) autour d'un premier axe (4), sachant que la lumière (3) parvenant sur l'élément dispersif (2) est dispersée spectralement par celui-ci et la direction de la lumière (9) spectralement dispersée est réglée de façon unidimensionnelle par positionnement de l'élément dispersif (2) autour d'un deuxième axe (5).

11. Procédé selon la revendication 10, **caractérisé en ce qu'**une analyse par balayage avec l'élément dispersif (2) est exécutée de façon sélective des longueurs d'onde et/ou de façon séquentielle.

12. Procédé selon la revendication 10 ou 11, **caractérisé en ce que** la zone géométrique (6) de l'échantillon (7) est balayée de façon linéaire.

13. Procédé selon l'une quelconque des revendications 10 à 12, **caractérisé en ce que** la lumière (3) parvenant sur l'élément dispersif (2) est dispersée spectralement dans un plan passant autour du premier axe (4) de l'élément dispersif (2).

14. Procédé selon l'une quelconque des revendications 10 à 13, **caractérisé en ce que** la lumière spectralement dispersée (9) est saisie en fonction de la déviation de l'élément dispersif (2) autour du deuxième axe (5) par un détecteur (10) constitué sous la forme d'un détecteur ponctuel fixe.
